Europäisches Patentamt

European Patent Office

Office européen des brevets

(19)

(11) Numéro de publication : **0 066 740**
**B1**

(12) **FASCICULE DE BREVET EUROPÉEN**

(45) Date de publication du fascicule du brevet :
**30.07.86**

(21) Numéro de dépôt : **82104334.6**

(22) Date de dépôt : **18.05.82**

(51) Int. Cl.⁴ : **H 01 B  7/08**, B 29 C 47/32,
**H 01 B 13/14**

(54) **Dispositif de fabrication de câbles plats.**

(30) Priorité : **22.05.81 FR 8110216**

(43) Date de publication de la demande :
**15.12.82 Bulletin 82/50**

(45) Mention de la délivrance du brevet :
**30.07.86 Bulletin 86/31**

(84) Etats contractants désignés :
**BE CH DE FR GB IT LI LU NL**

(56) Documents cités :
**CH-A-   492 543**
**FR-A- 2 086 267**
**GB-A-   815 573**
**US-A- 3 754 847**

(73) Titulaire : **FILOTEX S.A. dite**
**140-146, rue Eugène Delacroix**
**F-91210 Draveil (FR)**

(72) Inventeur : **Viaud, André**
**3, rue de Beauregard**
**F-91560 Crosne (FR)**

(74) Mandataire : **Weinmiller, Jürgen et al**
**Zeppelinstrasse 63**
**D-8000 München 80 (DE)**

Jouve, 18, rue St-Denis, 75001 Paris, France

Description

L'invention concerne un dispositif de fabrication de câbles plats. Elle s'applique notamment à la fabrication de câbles électriques comportant un grand nombre de conducteurs métalliques isolés les uns des autres.

Un premier dispositif connu pour la fabrication de tels câbles comporte une filière dont la fente est sensiblement rectiligne. Une nappe plate est formée par des fils qui doivent constituer les conducteurs ou âmes du câble. Cette nappe est positionnée par un guide-fils et tirée dans le plan médian de cette fente. Une gaine en matière plastique est extrudée à travers la filière autour des conducteurs qu'elle enrobe. Ce dispositif présente divers inconvénients :

1. Le prix de revient de l'ensemble de la filière et du guide-fils est élevé en raison de leur profil complexe. Cet inconvénient est important car l'usure de la filière oblige à la remplacer souvent. Il en résulte que le prix de la filière est une composante importante du coût de fabrication du câble plat.

2. La forme rectiligne de la fente d'une telle filière crée des difficultés pour obtenir l'extrusion d'une gaine homogène d'épaisseur convenable. Ces difficultés peuvent être surmontées par un choix convenable de la forme de la filière et de la composition de la matière plastique. Mais en ce qui concerne cette composition il est difficile d'obtenir à la fois une bonne extrusion et de bonnes propriétés électriques et mécaniques de la gaine.

3. Le profil de la filière doit être longuement mis au point pour chaque type de câble plat. Or il est nécessaire de fabriquer, en quantité parfois peu importante, des types très divers de câbles plats, différent par exemple par le nombre et le diamètre des conducteurs.

Ces inconvénients sont évités dans un deuxième dispositif connu, décrit par exemple par le brevet US-A-3 082 292. Celui-ci exige que l'on ait fabriqué d'abord des rubans de matière plastique, qui ont été mis en réserve. Deux de ces rubans sont disposés sur les deux faces d'une nappe de conducteurs métalliques, et l'on fait passer l'ensemble, convenablement réchauffé, entre deux rouleaux de pression qui assurent la soudure de chaque ruban à l'autre dans les intervalles entre les fils métalliques et sur les bords de la nappe. Ce deuxième dispositif présente les inconvénients suivants :

1. Il nécessite le stockage de produits intermédiaires, qui sont les rubans en matière plastique. Ceci complique et allonge le processus total de fabrication.

2. Il nécessite un réchauffage de la matière plastique qui avait été déjà mise à chaud sous la forme de rubans. Ce deuxième chauffage est nécessaire pour la mise en forme et la soudure de la gaine du câble. Il entraîne une certaine altération de la matière plastique, notamment une perte d'homogénéité. Les performances mécaniques et électriques du câble plat risquent ainsi d'être un peu diminuées.

Ces inconvénients sont évités dans un troisième dispositif connu décrit par exemple dans le brevet FR-A-2 189 833 ou le brevet GB-A-815 573. Une nappe plane de fils parallèles est guidée dans l'axe d'un ensemble filière mandrin constituant une fente circulaire à travers laquelle un tube de matière plastique est extrudé. L'ensemble encore chaud est serré entre deux rouleaux de calandrage cannelés.

Mais ce troisième dispositif connu présente d'autres inconvénients :

1. Quoique l'ensemble filière-mandrin soit d'un prix de revient moins élevé que dans le premier dispositif connu, ce prix reste cependant élevé.

2. Le réglage et la maintenance de cet ensemble sont difficiles si on veut obtenir une fente circulaire d'épaisseur précisément définie malgré l'usure inévitable.

3. Le guidage des fils métalliques qui doivent constituer les âmes du câble est réalisé par un guide-fils placé dans l'axe de la fente et en cas de rupture d'un fil dans ce guide-fils, les opérations de réinsertion d'un fil dans le trou correspondant sont longues et difficiles, en raison des difficultés d'accès et de la haute température de la tête d'extrusion dans laquelle est incorporé le guide-fils. La position du guide-fils peut de plus difficilement être ajustée en raison de la masse de l'ensemble d'extrusion dans lequel il est incorporé, et elle peut être affectée par les dilatations apparaissant dans cet ensemble lorsqu'il est chauffé.

Par le document FR-A-2 086 267, on connaît un dispositif selon le préambule de la revendication 1, qui fournit un câble plat à partir d'une nappe de fils et d'une boudineuse, qui crée une couche de matière plastique de part et d'autre de cette nappe. Ces deux couches sont appliquées contre la nappe à l'aide de deux rouleaux immobiles, qui sont prévus pour guider et dévier les écoulements du mélange fondu. En absence d'un guidage précis des fils de la nappe à proximité du point où les deux couches sont appliquées sur la nappe, il semble impossible de fabriquer par cette méthode un câble plat dont les conducteurs sont suffisamment proches l'un de l'autre pour éviter une largeur excessive du câble, sans toutefois se contacter directement.

On connaît en outre par le document CH-A-492 543 un dispositif pour la fabrication d'un ruban thermoplastique, qui est armé de fils longitudinaux. La nappe de fils est guidée par deux peignes disposés en amont de l'ensemble d'extrusion. Ces peignes ne sont pas susceptibles de maintenir le positionnement correct des fils jusqu'au refroidissement de la matière plastique. D'ailleurs, cela ne constitue pas un inconvénient majeur lorsque les fils servent à l'armement d'un ruban thermoplastique et non à la transmission de signaux électriques.

L'invention a pour but de proposer un dispositif selon le préambule de la revendication principale, qui assure un positionnement très précis des fils de la nappe lors de l'extrusion de la matière plastique, ce qui permet de faire passer l'ensemble constitué par la nappe des fils et les deux couches de matière plastique entre deux rouleaux calandreurs à profil cannelé en correspondance avec le positionnement des fils de la nappe.

Ce but est atteint par le dispositif tel qu'il est caractérisé dans la revendication 1.

A l'aide des figures schématiques ci-jointes, on va décrire ci-après, à titre non limitatif, un dispositif selon l'invention.

La figure 1 représente une vue des ensembles d'extrusion et de calandrage de ce dispositif en coupe par un plan vertical longitudinal médian, c'est-à-dire passant par la ligne médiane de la nappe de fils qui constitue les âmes du câble fabriqué.

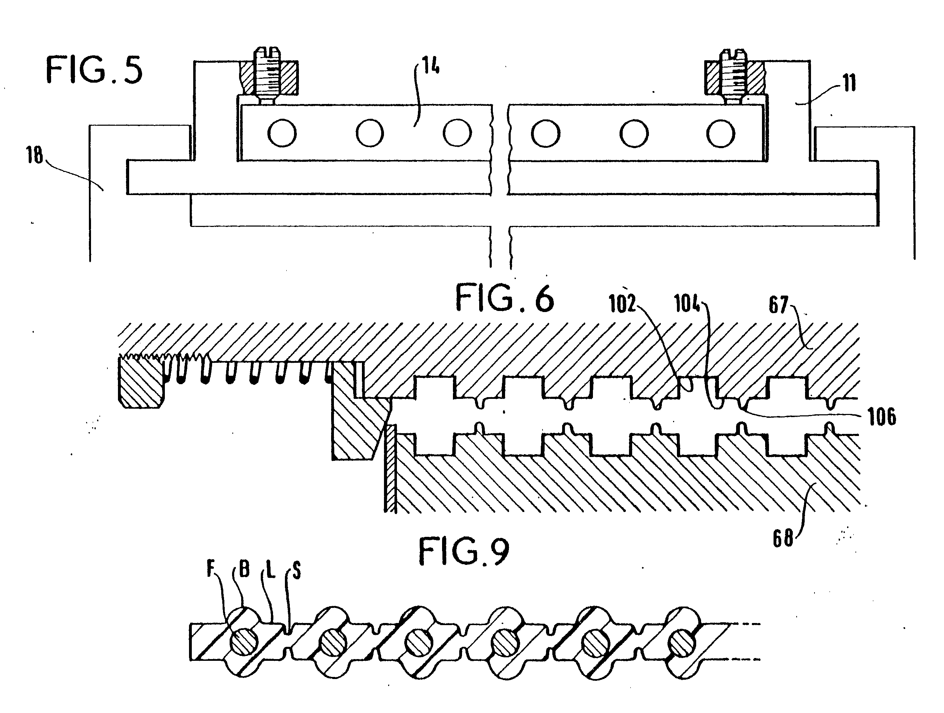

Les figures 2, 3, 4 et 5 représentent des vues partielles de ce dispositif en coupe par des plans II-II, III-III, IV-IV, V-V de la figure 1, respectivement ces plans étant verticaux transversaux c'est-à-dire perpendiculaires aux fils, l'échelle étant agrandie sur la figure 5.

La figure 6 représente un détail à échelle agrandie de la figure 4.

Les figures 7 et 8 représentent des vues de l'ensemble du même dispositif selon l'invention, respectivement en vue de profil et de dessus.

La figure 9 représente une section droite d'un câble plat selon l'invention.

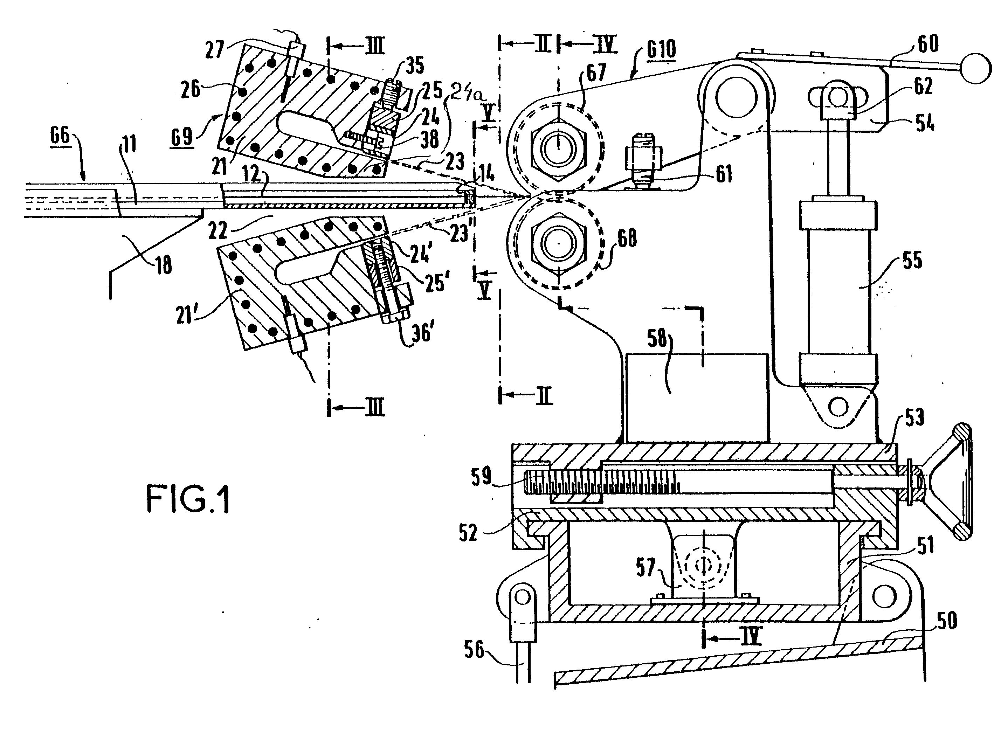

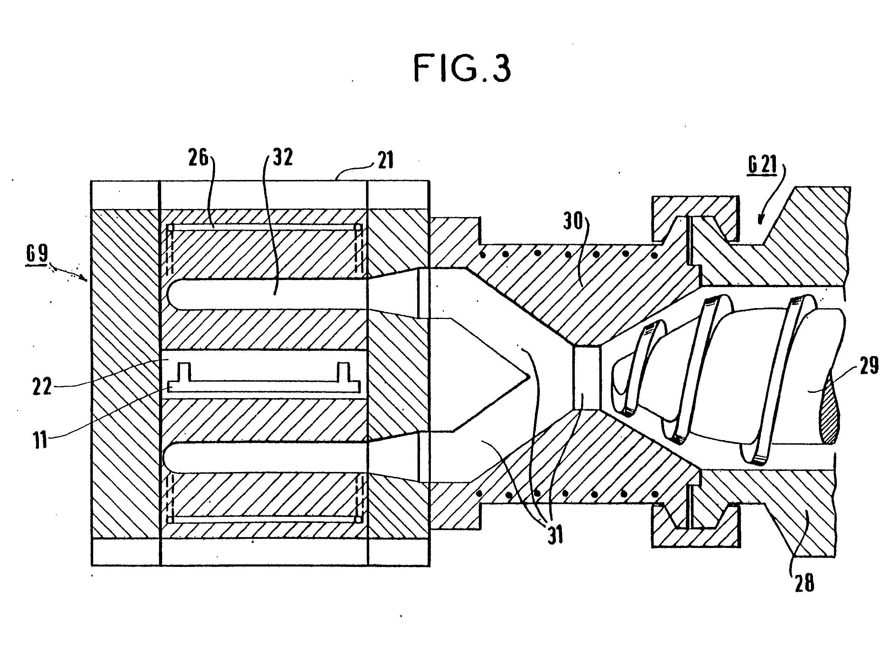

Conformément à la figure 1 un dispositif selon l'invention comporte un ensemble d'extrusion G9 comportant lui-même deux têtes d'extrusion superposées, une tête supérieure 21 et une tête inférieure 21', alimentées en matière plastique chaude par une boudineuse G21 (voir figure 3) dont l'axe est horizontal transversal c'est-à-dire perpendiculaire au plan de la figure 1. Un ensemble de guidage G6 guide une nappe horizontale 12 de fils de cuivre parallèles qui avancent dans le sens de leurs longueurs en passant entre les deux têtes 21 et 21'. Les mots « aval » et « amont » seront employés ci-après en se référant au sens de déplacement de ces fils, la direction de ces fils étant appelée « longitudinale », et la direction horizontale perpendiculaire étant appelée « transversale ».

Chacune de ces têtes fournit une bande de matière plastique chaude 23 au-dessus et 23' au-dessous de la nappe de fils 12, l'ensemble passant ensuite entre les rouleaux 67 et 68 d'un ensemble de calandrage G10. Les axes de ces rouleaux sont horizontaux transversaux. L'ensemble de guidage G6 comporte un bâti 18 disposé en amont des deux têtes d'extrusion et portant en porte à faux une poutre 11 qui s'étend vers l'aval, passe dans l'intervalle entre ces deux têtes sans les toucher, et porte à son extrémité en aval de ces têtes un guide-fils 14 qui guide individuellement chacun des fils de la nappe 12.

On va maintenant donner une nomenclature des principaux éléments des ensembles d'extrusion G9 et de calandrage G10, étant entendu que la tête inférieure 21' étant symétrique de la tête supérieure 21 par rapport au plan horizontal de la nappe de fils 12, les éléments de la tête inférieure ne sont pas énumérés dans cette nomenclature. Ils sont désignés par les mêmes numéros de référence que les éléments symétriques de la tête supérieure en ajoutant seulement une apostrophe.

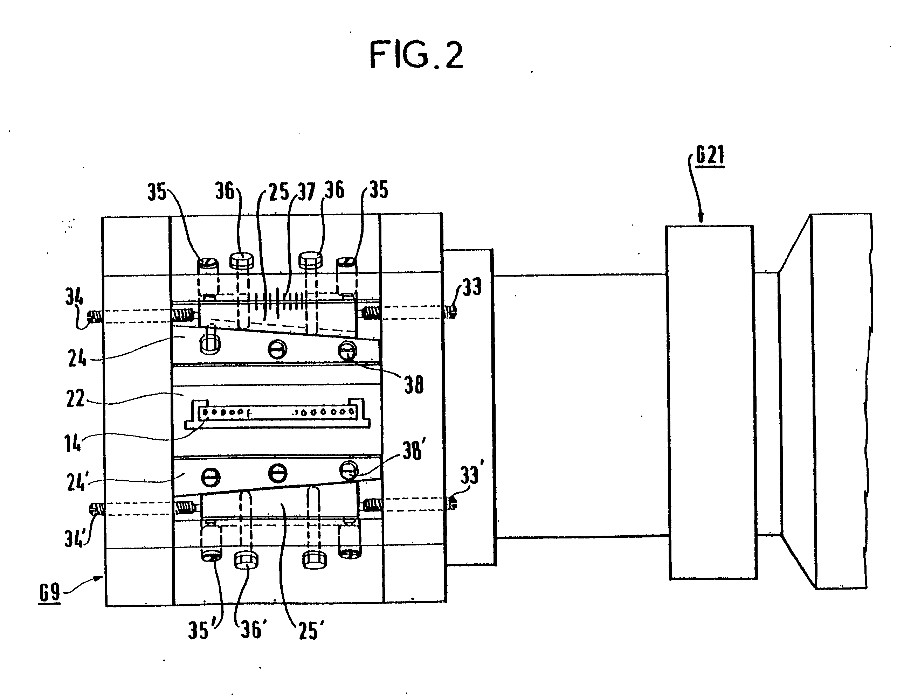

Ensemble d'extrusion (voir figures 2 et 3)

21 : tête supérieure prismatique en plusieurs éléments.

22 : passage pour l'ensemble de guidage fils entre la tête inférieure et la tête supérieure.

23 : Bande supérieure de matière thermoplastique d'enrobage des fils.

23' : Bande inférieure de la même matière.

24 : Lèvre supérieure réglable de la fente d'extrusion de la bande supérieure 23, la lèvre inférieure 24a de cette fente étant fixe.

25 : Coin de réglage de la lèvre supérieure 24, le réglage de l'épaisseur de la fente se faisant par déplacement de ce coin perpendiculairement au plan de la figure 1.

26 : Résistances chauffantes.

27 : Sonde de régulation thermique.

28 : Corps de la boudineuse (voir figure 3) alimentant les deux têtes d'extrusion.

29 : Vis d'extrusion poussant la matière plastique chaude vers des chambres internes 32 et 32' des têtes d'extrusion.

30 : Collet support de tête et de distribution de la matière.

31 : Canal de distribution et répartition haut/bas de la matière plastique chaude.

32 : Chambre interne de la tête supérieure.

33-34 : Deux vis antagonistes pour le réglage de position du coin supérieur 25 (figure 2).

35 : Deux vis de réglage d'inclinaison de la lèvre supérieure 24.

36 : Deux vis tirant la lèvre supérieure 24 contre le coin 25 pour assurer le blocage en hauteur de la lèvre supérieure 24.

37 : Graduation de repérage du réglage d'épaisseur de la bande 23.

38 : Ensemble vis et rondelles élastiques de placage de la lèvre supérieure 24 contre la tête supérieure.

L'action sur les coins 25 et 25' à l'aide des vis 33, 34, 36 et 33', 34', 36' permet d'augmenter ou diminuer l'épaisseur des deux bandes de matière extrudée, tout en assurant l'uniformité et l'égalité d'épaisseur des deux bandes.

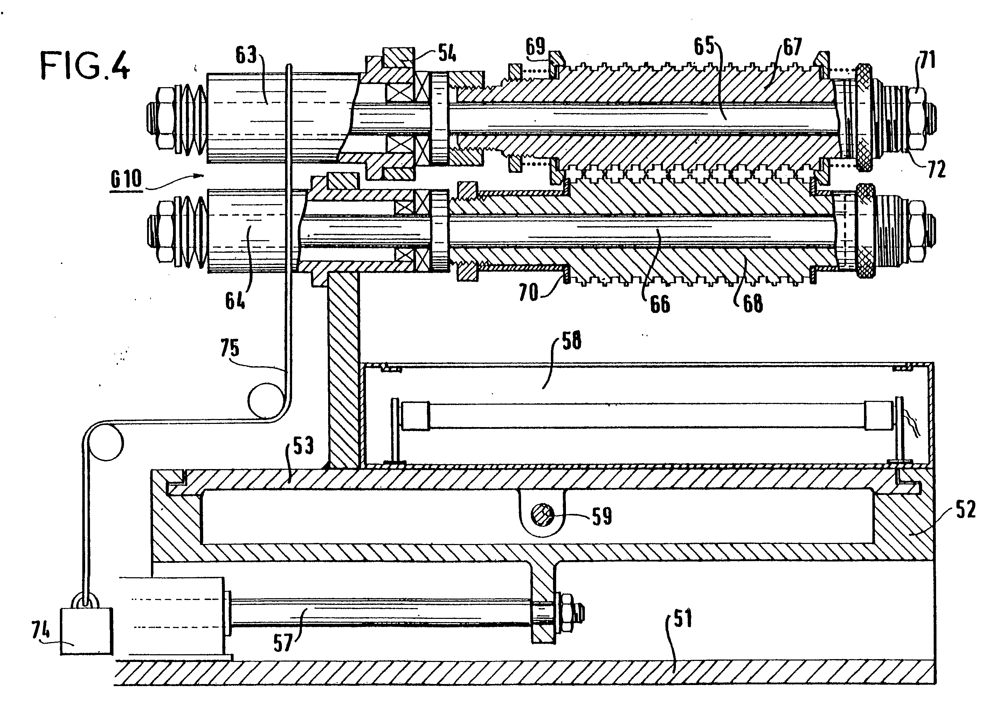

Ensemble de calandrage (voir figures 1 et 4)

50 : Bâti de support.

51 : Support basculant inférieur (le basculement permet d'abaisser le rouleau inférieur 68 pour permettre ensuite son dégagement latéral pour maintenance ou réglage).

52 : Chariot latéral.

53 : Chariot longitudinal portant le rouleau calandreur inférieur.

54 : Levier de support du rouleau calandreur supérieur.

55 : Vérin de levage du rouleau supérieur.

56 : Vérin d'abaissement des deux rouleaux.

57 : Vérin de transfert latéral des rouleaux.

58 : Boîte lumineuse pour permettre le contrôle visuel du positionnement des fils dans le câble grâce à la semitransparence de la matière plastique.

59 : Vis de positionnement longitudinal des rouleaux.

60 : Levier manuel de levage du rouleau supérieur pour permettre de positionner latéralement chaque fil par rapport aux rouleaux.

61 : Butée de sécurité pour empêcher un rapprochement excessif des rouleaux.

62 : Chape à œil oblong pour assurer la liaison entre le piston du vérin 55 et le levier 54 lorsqu'on veut relever le rouleau supérieur et pour éviter en même temps tous risque d'action sur ce levier en cours de fabrication du câble.

63 : Palier du rouleau supérieur.

64 : Palier du rouleau inférieur.

65 : Axe du rouleau supérieur.

66 : Axe du rouleau inférieur.

67 : Rouleau calandreur supérieur.

68 : Rouleau calandreur inférieur.

69 : Bague de cisaillage portée par le rouleau supérieur.

70 : Rondelle de cisaillage portée par le rouleau inférieur (cette bague et cette rondelle coupent l'excès de matière plastique sur les bords du câble en cours de fabrication).

71 : Ecrou.

72 : Rondelle élastique.

74 : Contre poids de pression définissant la pression appliquée par les rouleaux sur la matière plastique.

75 : Câble du contre poids.

76 : Câble terminé.

On va maintenant décrire le fonctionnement de l'ensemble de calandrage, tout d'abord lors de la préparation de la fabrication :

Sur le bâti 50 est monté un ensemble de chariots à mouvements croisés permettant les manœuvres suivantes :

dégagement latéral de l'ensemble, à l'aide du vérin 57, agissant sur le chariot 52, préalablement libéré par l'action simultanée des vérins 55 et 56 qui respectivement soulève le rouleau supérieur et abaisse le rouleau inférieur.

positionnement longitudinal des calandres à une distance horizontale des fentes d'extrusion, pour tenir compte du retrait de la matière, ceci à l'aide de la vis 59.

Les rouleaux calandreurs sont libres de se déplacer dans le sens vertical. Ils sont par contre maintenus parfaitement alignés dans le sens transversal.

La butée 61 les empêche de se heurter l'un à l'autre.

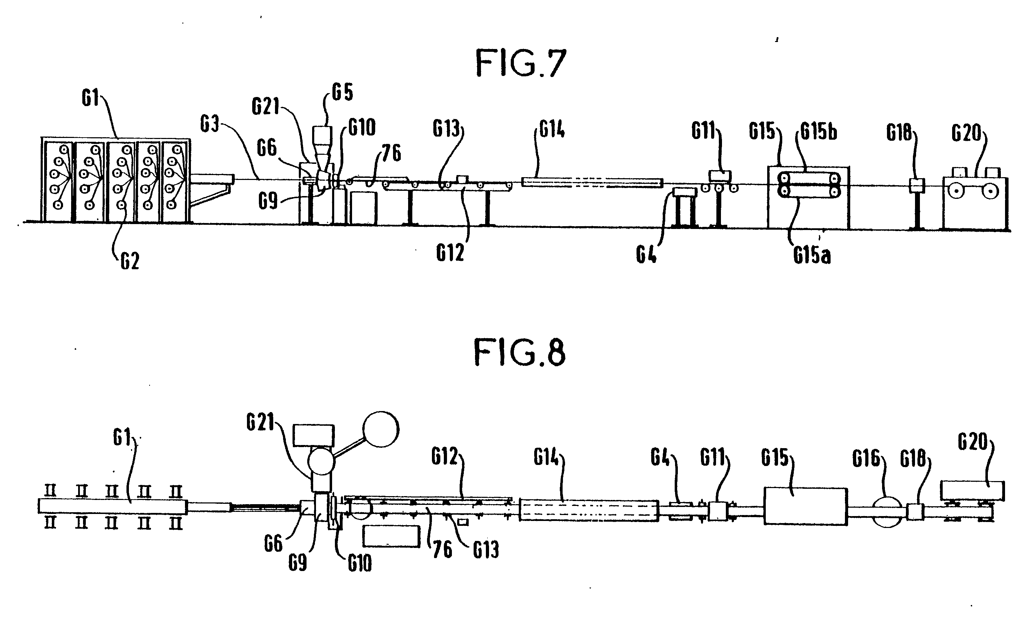

Pour la fabrication du câble, les deux rouleaux étant ouverts, on avance le guide-fils chargé de fils. Les fils sont accrochés classiquement à une corde de tirage elle-même entraînée par la chenille G15 de la ligne (c'est-à-dire entre des bandes d'entraînement G15a et G15b situées sur la ligne de fabrication en aval de l'ensemble de calandrage, selon les figures 7 et 8).

Le démarrage de la boudineuse entraîne l'apparition des deux bandes de matière plastique (polychlorure de vinyle). Un ouvrier plaque ces bandes sur la nappe de fils et elles sont dès lors entraînées par cette dernière.

Le rapprochement des rouleaux réalise le profilage de la matière plastique sous l'action du contre poids 74 qui définit avec précision la pression appliquée par les rouleaux sur les bandes de matière plastique.

L'absence de butées de positionnement dans le sens vertical permet aux rouleaux un ajustement automatique en fonction des variations du débit des têtes d'extrusion, c'est-à-dire de l'épaisseur des bandes extrudées, et permet d'absorber toutes les variations d'épaisseur sans agir sur l'entraxe des conducteurs.

Les deux rouleaux de calandrage 67 et 68 sont identiques. Ils comportent chacun des gorges circulaires 102 se succédant selon la longueur du rouleau et séparées par des cannelures circulaires en relief 104, les gorges d'un rouleau étant en regard de celles de l'autre. Chacune des cannelures 104 porte un filet d'affaiblissement 106 faisant saillie sur tout le périmètre de son cercle médian.

Ces gorges forment sur la matière plastique chaude des gaines en relief B enrobant les fils F (voir figure 9) et les cannelures forment des bandes de liaison plates d'épaisseur moindre joignant les gaines. Quant aux filets d'affaiblissement, ils forment dans la matière plastique des sillons S permettant une déchirure facile du câble fini entre deux fils conducteurs enrobés par leurs gaines.

L'un des rouleaux pourrait bien entendu être réalisé sans gorges ni cannelures si on voulait fabriquer un câble plat avec une face lisse.

Les côtes du câble fini sont données :

en pas transversal des conducteurs, par le pas des gorges des rouleaux, compte devant être tenu du retrait de la matière après le calandrage, l'importance du retrait latéral dépendant de la distance entre la sortie des têtes d'extrusion et les rouleaux,

en épaisseur par le rapport du débit de la matière thermoplastique à la vitesse de défilement du câble.

Il doit être entendu que les ensembles de guidage des fils d'extrusion et de calandrage appartiennent à un ensemble plus vaste qui comporte d'autres éléments et qui va maintenant être décrit de façon brève car ces autres éléments sont eux-même bien connus de l'homme de l'art.

Un « cantre » G1 (bâti de support de bobines) (voir figures 7 et 8) porte soixante bobines G2 fournissant les fils G3 à enrober qui sont guidés vers l'ensemble de guidage G6 (figure 1). Ces fils passent dans l'ensemble d'extrusion G9 comportant la boudineuse G21 alimentée en matière plastique par un groupe G5 puis.dans l'ensemble de calandrage G10. Ces fils enrobés dans la matière plastique constituent alors le câble plat 76 et ils passent successivement (voir figure 7) par les éléments suivants : une gouttière de refroidissement par air G12 dans laquelle ils sont supportés par des galets G13, un bac de refroidissement G14, une boîte à lumière G4, un dispositif de marquage G11, la chenille de tirage G15 dans laquelle le câble 76 est serré entre les bandes souples G15a et G15b, et un dispositif de contrôle G18 précédant un enrouleur G20.

A titre d'exemple on peut donner les valeurs suivantes pour la fabrication d'un câble conforme à la figure 9 et constitué de soixante fils conducteurs électriques à sept brins de 0,13 mm de diamètre formant un toron de 0,39 mm régulièrement espacés de 1,27 mm et enrobés dans une gaine épaisse de 0,4 mm et constituée de polychlorure de vinyle chargé de kaolin à 2,5 % en poids avec 34 % d'un plastifiant phtalate.

Epaisseur de la fente d'extrusion : de 0,5 à 0,6 mm,

largeur de la fente d'extrusion : 85 mm,

Débit total de matière plastique : 1 800 à 2 000 gr/par minute selon l'importance des déchets,

Température en sortie de la filière, 170 °C,

Température des rouleaux 120 °C,

Diamètre des rouleaux au sommet des cannelures, 55 mm,

Largeur des cannelures : 1,372,

Vitesse de défilement 20 m/mn

Force de pression entre les rouleaux 25 kg,

Coefficient de retrait de la gaine 8 %.

Le nombre des fils conducteurs peut atteindre 100 avec des diamètres compris entre 0,16 et 6 mm. Ces conducteurs sont multifilamentaires si leur diamètre dépasse 0,8 mm.

Le pas de ces fils conducteurs peut être compris entre 0,4 et 60 mm, avec une rive (partie latérale extrême de la gaine) égale au moins à la moitié de ce pas. La largeur totale du câble peut atteindre 65 mm. La présence des sillons S permet une séparation ultérieure du câble en plusieurs câbles de largeurs moindres, par simple déchirure manuelle ou mécanique. Il est également facile de choisir pour la gaine une épaisseur suffisamment faible pour permettre la prise de contacts électriques par perforation de la gaine par les broches des connecteurs autodénudants. Le rapport de la largeur du câble à son épaisseur peut être supérieur à 100.

Les fils enrobés selon l'invention peuvent déjà comporter chacun une première gaine isolante individuelle, et être enrobés dissymétriquement. Ces fils peuvent être de types différents dans un même câble. Il doit être compris que le mot fil utilisé ici désigne toute espèce d'éléments linéaires souples susceptibles d'être enrobés dans une matière extrudable. Ces « fils » peuvent être non seulement des conducteurs électriques, mais aussi des fibres optiques, des fils de traction mécanique en acier, des tuyaux de transport d'un fluide, etc. La gaine peut comporter une zone centrale sans fils de manière à permettre sa fixation, notamment par agrafage.

La matière plastique utilisée doit être extrudable. On peut notamment utiliser les matériaux suivants :

le polychlorure de vinyle (PVC)

le fluoroéthylène-propylène (FEP)

le perfluoroalkoxy (PFA)

l'éthylène tétrafluoroéthylène (ETFE)

l'éthylène chlorotrifluoroéthylène (ECTFE) les polyoléfines (polyéthylène...)

les polyuréthanes et les polyamides

les matériaux thermodurcissables à condition qu'ils soient extrudables tels que les élastomères.

Les rouleaux 67, 68 sont normalement en bronze. Cependant, dans le cas de matières plastiques collantes à chaud telles que les polyuréthanes et polyamides, les rouleaux peuvent être revêtus d'une matière peu adhésive, par exemple de polytétrafluoréthylène (PTFE).

De préférence la distance longitudinale entre les fentes d'extrusion d'une part et l'intervalle entre les rouleaux calandreurs 67, 68 d'autre part est comprise entre 75 et 150 mm, la distance entre ces deux fentes étant comprise entre 33 % et 66 % de cette distance longitudinale.

Ceci permet d'assurer à la fois une réalisation facile de l'ensemble d'extrusion, et des températures de matière plastique convenables en sortie de cet ensemble et entre les rouleaux calandreurs.

La présente invention présente de nombreux avantages.

Exécution aisée des fentes d'extrusion

des gaines d'épaisseurs différentes sont obtenues par simple réglage des fentes d'extrusion.

Le profil final du câble est obtenu par rapprochement/soudure et calandrage de matière plastique en phase pâteuse. L'obtention d'un profil complexe nécessite donc seulement l'exécution de pièces de révolution simples comportant une série de gorges et de cannelures.

La forme de ces cannelures autorise un compactage plus ou moins important des bandes de matière plastique et permet d'obtenir, entre éléments, une diminution locale de l'épaisseur de matière créant des sillons à résistance mécanique faible rendant la gaine souple et déchirable aisément.

changement facile du nombre de conducteurs et du pas par changement du jeu de rouleaux : la durée est inférieure à cinq minutes.

possibilité de fabriquer simultanément plusieurs câbles de largeurs moindres.

absence de filière de profil complexe les rouleaux de bronze étant obtenus par simple tournage

l'ensemble de guidage des fils est indépendant grâce à la séparation physique complète des trois ensembles de guidage, d'extrusion et de calandrage, ce qui permet de régler la position du guide-fils facilement sans craindre un déréglage ultérieur.

Le guide-fils non spécifique permet toutes les combinaisons de composition sans changement de dispositif de 0 à 100 conducteurs.

La séparation des trois ensembles permet l'action sur chacun d'eux sans interférence sur les deux autres, ce qui autorise une optimisation de chaque caractéristique.

Les têtes produisent des bandes de largeur toujours la même indépendante du produit final à obtenir.

## Revendications

1. Dispositif de fabrication de câbles plats, ce dispositif comportant

des moyens pour fournir en continu une nappe plane (12) de fils métalliques parallèles (F) se déplaçant parallèlement à eux-mêmes selon une direction « longitudinale » vers un côté « aval » du dispositif, destinés à constituer les âmes conductrices du câble plat à fabriquer,

deux têtes d'extrusion (21, 21') faisant partie d'une boudineuse commune (G21) pour extruder de la matière plastique chaude suivant deux bandes afin d'envelopper cette nappe de fils,

deux rouleaux (67, 68) disposés en regard l'un de l'autre, de part et d'autre de cette nappe entourée par la matière plastique chaude, de manière que ces rouleaux compriment entre eux cette matière plastique et assurent ainsi dans l'intervalle entre les fils une soudure entre la matière plastique située d'un côté de la nappe et celle située de l'autre côté,

et des moyens (G15) placés en aval des rouleaux pour entraîner le câble plat ainsi formé,

caractérisé en ce que les axes des deux rouleaux, qui sont des calandreurs (67, 68), sont parallèles à la nappe (12) et perpendiculaires aux fils, que chacune des têtes d'extrusion comporte deux lèvres rectilignes (24, 24a) pour délimiter une fente d'extrusion parallèle à la nappe de fils et perpendiculaire aux fils, l'une (24) au moins de ces lèvres étant réglable pour pouvoir ajuster la largeur de la fente, que l'un au moins des rouleaux calandreurs comporte une succession de gorges circulaires en creux (102) séparées par des cannelures en relief (104), la disposition des gorges correspondant au pas des fils dans la nappe, qu'un guide-fils (14), qui est disposé en aval des fentes d'extrusion, est supporté par une poutre (11) s'étendant depuis l'amont des deux têtes d'extrusion (21, 21') en passant dans l'intervalle entre les deux têtes à distance de celles-ci, sans s'appuyer sur les têtes d'extrusion (21, 21'), cette poutre étant maintenue en porte à faux sur un bâti (18) situé en amont des têtes d'extrusion (21, 21'), de manière à rendre la position du guide-fils indépendante des déformations des têtes d'extrusion et à éviter le contact thermique entre le guide-fils et ces têtes.

2. Dispositif selon la revendication 1, caractérisé par le fait que la distance longitudinale entre les fentes des têtes d'extrusion (21, 21') d'une part et l'intervalle entre les rouleaux calandreurs (67, 68) d'autre part est comprise entre 75 et 150 mm, la distance entre les fentes de sortie de la matière plastique des deux têtes étant comprise entre 33 % et 66 % de cette distance longitudinale.

## Claims

1. A device for manufacturing flat cables, this device comprising

means for continuously supplying a flat sheet (12) of parallel metal wires (F) moving parallelly to themselves according to a « longitudinal » direction towards a « downstream » side of the device, conceived to constitute the conducting cores of the flat cable to be manufactured,

two extrusion heads (21, 21') being part of a common extrusion device (G21) for extruding hot plastic material in two bands in order to cover this sheet of wires,

two rolls (67, 68) facing each other, on either side of this sheet surrounded by the hot plastic material, so that these rolls compress between them this plastic material and thus ensure, in the interval between the wires, a weld between the plastic material situated on one side of the sheet and that situated on the other side,

and means (G15) placed downstream of the rolls for driving the flat cable thus formed,

characterized in that the axes of the two rolls, which are calenders (67, 68), are parallel to the sheet (12) and perpendicular to the wires, that each of the extrusion heads comprises two rectilinear lips (24, 24a) for delimiting an extrusion slot parallel to the sheet of wires and perpendicular to the wires, one (24) at least of these lips being adjustable, so that the width of the slot can be adjusted, that at least one of the calender rolls comprises a succession of circular hollow grooves (102) separated by relief ribs (104), the disposition of the grooves corresponding to the distance of the wires in the sheet, that a wire-guide (14), which is disposed downstream of the extrusion slots, is supported by a girder (11) extending from upstream of the two extrusion heads (21, 21'), passing through the interval between the two heads at a distance thereto, without propping on the extrusion heads (21, 21'), this girder being maintained in a self-supporting manner on a rack (18) situated upstream of the extrusion heads (21, 21'), so as to render the position of the wire-guide independent of the deformations of the extrusion heads and to avoid the thermical contact between the wire-guide and these heads.

2. A device according to claim 1, characterized in that the longitudinal distance between the slots of the extrusion heads (21, 21') on the one hand and the interval between the calender rolls (67, 68) on the other hand is comprised between 75 and 150 mm, the distance between the plastic material outlet slots of the two heads being comprised between 33 % and 66 % of this longitudinal distance.

## Patentansprüche

1. Vorrichtung zur Herstellung von Flachbandkabeln, wobei diese Vorrichtung aufweist:

Mittel, um kontinuierlich eine flache Schicht

(12) aus parallelen Metalldrähten (F) zu bilden, die sich parallel zueinander entlang einer « Längs »-Richtung zu einer « stromabwärts » liegenden Seite der Vorrichtung bewegen und dazu bestimmt sind, die leitenden Seelen des herzustellenden Flanchbandkabels zu bilden,

zwei Spritzköpfe (21, 21'), die Teil einer gemeinsamen Spritzvorrichtung (G21) sind, um heißes Kunststoffmaterial in Form zweier Bänder zu spritzen, die diese Drahtschicht umhüllen,

zwei Rollen (67, 68), die einander gegenüberliegend auf beiden Seiten dieser von heißem Kunststoffmaterial umgebenen Schicht angeordnet sind, so daß diese Rollen zwischen sich dieses Kunststoffmaterial komprimieren und so in dem Zwischenraum zwischen den Drähten eine Schweißung zwischen dem Kunststoffmaterial auf der einen Seite und dem auf der anderen Seite der Schicht bilden,

und Mittel (G15), die hinter den Rollen angeordnet sind, um das so geformte Flachbandkabel anzutreiben, dadurch gekennzeichnet, daß die Achsen der beiden Rollen, die Kalander (67, 68) sind, parallel zur Schicht (12) und senkrecht zu den Drähten liegen, daß jeder der Spritzköpfen zwei geradlinige Lippen (24, 24a) aufweist, um einen Spritzschlitz zu bilden, der parallel zur Drahtschicht und senkrecht zu den Drähten liegt, wobei mindestens eine dieser Lippen (24) einstellbar ist, um die Breite des Schlitzes festzulegen, daß mindestens eine der Kalanderrollen eine Folge von hohlen kreisförmigen Kehlen (102) aufweist, die durch Reliefrillen (104) voneinander getrennt sind, wobei die Anordnung der Kehlen dem Abstand der Drähte in der Schicht entspricht, daß eine Drahtführung (14), die sich hinter den Spritzschlitzen befindet, von einem Träger (11) getragen wird, der sich vom Bereich vor den beiden Spritzköpfen (21, 21') über den Zwischenraum zwischen den beiden Köpfen im Abstand von diesen, ohne sich auf den Spritzköpfen (21, 21') abzustützen, erstreckt, wobei dieser Träger freitragend auf einem Gerüst (18) gehalten wird, das sich stromaufwärts vor den Spritzköpfen (21, 21') befindet, um so die Position der Drahtführung unabhängig von den Verformungen der Spritzköpfe zu machen und um den thermischen Kontakt zwischen der Drahtführung und diesen Köpfen zu vermeiden.

2. Vorrichtung nach Anspruch 1, dadurch gekennzeichnet, daß der Längsabstand zwischen den Schlitzen der Spritzköpfe (21, 21') einerseits und dem Zwischenraum zwischen den Kalanderrollen (67, 68) andererseits zwischen 75 und 150 mm liegt, wobei der Abstand zwischen den Austrittsschlitzen des Kunststoffmaterials aus den beiden Köpfen zwischen 33 % und 66 % dieses Langsabstands liegt.

FIG.1

0 066 740

# FIG.2

0 066 740

# FIG.3

0 066 740

FIG.4

FIG.5

FIG.6

FIG.9

F B L S

# FIG.7

# FIG.8

0 066 740